# EUROPÄISCHE PATENTSCHRIFT

(11) **EP 3 820 955 B1**
(45) Veröffentlichungstag und Bekanntmachung des Hinweises auf die Patenterteilung: **04.05.2022**
(21) Anmeldenummer: 19737500.9
(22) Anmeldetag: 03.07.2019
(51) Int. Cl.: C09J 7/20, C09J 7/38, C09J 7/29, B32B 7/06

(54) **LOKAL DEAKTIVIERTE RELEASEBESCHICHTUNG**
LOCALLY DEACTIVATED RELEASE COATING
REVÊTEMENT ANTI-ADHÉRENT DÉSACTIVÉ LOCALEMENT

(30) Priorität: 11.07.2018 DE 102018116748
(43) Veröffentlichungstag der Anmeldung: 19.05.2021
(73) Patentinhaber: Loparex Germany GmbH & Co. KG, 91301 Forchheim (DE)
(72) Erfinder: PANHANS, Jürgen, 91056 Erlangen (DE)
(74) Vertreter: Kutzenberger Wolff & Partner
(86) Internationale Anmeldenummer: PCT/EP2019/067789
(87) Internationale Veröffentlichungsnummer: WO 2020/011609

(56) Entgegenhaltungen:
- EP-A1- 1 069 170
- GB-A- 1 315 516

## Beschreibung

Die Erfindung betrifft eine Folie, welche eine ggf. mehrlagige Trägerschicht umfasst; wobei eine Oberflächenseite der Trägerschicht teilflächig entweder durch Oberflächenaktivierung oder durch Bedruckung mit einem Bedruckungsmittel modifiziert ist, so dass die Oberflächenseite modifizierte Bereiche sowie nicht modifizierte Bereiche aufweist; wobei die modifizierten Bereiche sowie die nicht modifizierten Bereiche teilflächig oder vollflächig mit einem Release-Material beschichtet sind; und wobei die Haftung des Release-Materials gegen die Trägerschicht in den modifizierten Bereichen unterschiedlich stark ist im Vergleich zur Haftung des Release-Materials gegen die Trägerschicht in den nicht modifizierten Bereichen.

Haftklebstoffe finden in unterschiedlichsten technischen Bereichen Verwendung, u.a. zur Bereitstellung selbstklebender Oberflächen. Um selbstklebende Oberflächen gegen Schmutz und allgemein davor zu schützen, vorzeitig ihre Klebewirkung zu entfalten, werden sie vielfach mit Release-Folien (Release-Liner, Trennfolien) abgedeckt. Diese Release-Folien werden dann kurz vor dem bestimmungsgemäßen Einsatz der selbstklebenden Oberflächen abgezogen, wodurch der dort befindliche Haftklebstoff freigelegt wird und an einem Substrat angebracht werden kann, wodurch es zur gewünschten Haftung kommt. Die Release-Folien werden dann meist entsorgt.

Ein Beispiel für Produkte mit selbstklebenden Oberflächen sind Bitumenbahnen, welche im Hausbau, insbesondere für Dächer eingesetzt werden. Diese Bitumenbahnen sind häufig mit einer selbstklebenden Oberfläche ausgerüstet, welche mit einer Release-Folie bedeckt ist. Kurz vor dem bestimmungsgemäßen Einsatz der Bitumenbahnen wird die Release-Folie entfernt und auf diese Weise die selbstklebende Oberfläche freigelegt, welche dann z.B. an einer Gebäudefläche angebracht werden kann, wo sie zum Schutz gegen Witterungseinflüsse eingesetzt wird. Schwierigkeiten entstehen, wenn beim Anbringen der Bitumenbahnen Lufteinschlüsse zwischen der selbstklebenden Oberfläche und der Gebäudefläche entstehen, so dass die selbstklebende Oberfläche nicht vollflächig an der Gebäudefläche haftet. In den Bereichen der Lufteinschlüsse befindet sich dann zwischen der selbstklebenden Oberfläche und der Gebäudefläche so viel Luft, dass dort der Haftklebstoff nicht an der Gebäudefläche haften kann. Diese Lufteinschlüsse sind jedoch von Bereichen umgeben, in denen die selbstklebende Oberfläche an der Gebäudefläche haftet, und können deshalb nicht entweichen. Temperaturschwankungen, welche infolge der Sonneneinstrahlung erheblich sein können, führen dann dazu, dass sich die eingeschlossene Luft wiederholt ausdehnt und wieder zusammenzieht, wodurch es mit der Zeit zur Schwächung der Bitumenbahn kommt, im ungünstigsten Fall zum Aufplatzen oder Reißen. Die Folge ist eine lokale Undichtigkeit, wodurch die gewünschte Wirkung gegen Witterungseinflüsse nicht mehr vollständig gewährleistet werden kann.

Ein weiteres Beispiel für Produkte mit selbstklebenden Oberflächen sind Klebebänder, welche häufig zu Rollen gegen sich selbst gewickelt sind. Eine der beiden Oberflächenseitenseiten der Klebebänder ist mit einem Haftklebstoff beschichtet und bildet dadurch eine selbstklebende Oberfläche. Die andere der beiden Oberflächenseiten ist mit einem Release-Material beschichtet, an welchem der Haftklebstoff im aufgerollten Zustand haftet. Wegen der Release-Wirkung kann das Klebeband von der Rolle abgelöst werden, wodurch die selbstklebende Oberfläche freigelegt wird, welche dann z.B. an einer Gebäudefläche angebracht werden kann. Solche Klebebänder werden mitunter zum Abdichten von Dampfbremsen in Dächern im Randbereich der Dampfbremse eingesetzt, wo diese an Sparren, Pfetten, Trägern, Wänden, etc. angebracht und luftdicht verschlossen werden muss. Schwierigkeiten entstehen, wenn solche Klebebänder infolge der baulichen Gegebenheiten oder aus sonstigen Gründen überlappend verklebt werden müssen. Wegen der rückseitigen Beschichtung mit dem Release-Material haftet die selbstklebende Oberfläche eines Streifens des Klebebands naturgemäß nur geringfügig auf der Rückseite eines zuvor verklebten Streifens des Klebebands.

DE 101 32 534 A1 betrifft ein Verfahren zur Herstellung eines Folienklebebandes, dadurch gekennzeichnet, dass ein Verbund aus mindestens einer extrudierten Trägerfolienschicht und einer Haftkleberschicht auf einer der Seiten der Trägerfolienschicht biaxial verstreckt wird.

DE 20 2014 105 973 U1 betrifft eine Folie mit mindestens einer Schicht enthaltend mindestens ein Homo- oder Copolymer, wobei über der besagten Schicht zumindest bereichsweise eine Hitzeschutzlackschicht aufgebracht ist und wobei über der Hitzeschutzlackschicht zumindest bereichsweise eine Beschichtung mit mindestens einem Polysiloxan aufgebracht ist.

Es besteht ein Bedarf an selbstklebend ausgerüsteten Produkten, welche die Nachteile des Standes der Technik überwinden.

Es ist eine Aufgabe der Erfindung, selbstklebend ausgerüstete Produkte bereitzustellen, bei welchen die Luft in potentiell ausgebildeten Lufteinschlüssen nach dem Verkleben noch entweichen kann. Es ist eine weitere Aufgabe der Erfindung, selbstklebend ausgerüstete Produkte bereitzustellen, welche vor dem bestimmungsgemäßen Einsatz gegen sich selbst gewickelt sind, so dass auf separate Release-Folien verzichtet werden kann, und welche auf verbesserter Art und Weise miteinander überlappend verklebt werden können.

Diese Aufgabe wird durch den Gegenstand der Patentansprüche gelöst.

Ein erster Aspekt der Erfindung betrifft eine Folie umfassend eine ggf. mehrlagige Trägerschicht mit einer ersten Oberflächenseite und einer gegenüberliegenden zweiten Oberflächenseite; wobei die zweite Oberflächenseite teilflächig entweder durch Oberflächenaktivierung oder durch Bedruckung mit einem Bedruckungsmittel modifiziert ist, so dass die zweite Oberflächenseite modifizierte Bereiche sowie nicht modifizierte Bereiche aufweist; wobei die modifizierten Bereiche sowie die nicht modifizierten Bereiche teilflächig oder vollflächig mit einem Release-Material beschichtet sind; und wobei die Haftung des Release-Materials gegen die Trägerschicht in den modifizierten Bereichen unterschiedlich stark ist im Vergleich zur Haftung des Release-Materials gegen die Trägerschicht in den nicht modifizierten Bereichen.

Es wurde überraschend gefunden, dass die Release-Eigenschaften von Release-Folien lokal geschwächt werden können, wodurch Release-Material in den geschwächten Bereichen lokal entfernt wird, wenn ein Haftklebstoff von dem Release-Material abgezogen wird, in den nicht geschwächten Bereichen jedoch verbleibt.

Ferner wurde überraschend gefunden, dass sich die geschwächten Bereiche so auf der Oberfläche von Folien anordnen lassen, dass sich beim Abziehen des Haftklebstoffs gezielte Strukturen ausbilden. Einerseits können beim Abziehen auf dem Haftklebstoff Stege aus Release-Material zurückbleiben, entlang derer sich Kanäle ausbilden, durch welche z.B. Lufteinschlüsse entweichen können. Andererseits können beim Abziehen auf dem Haftklebstoff Inseln aus Release-Material zurückbleiben, welche rundherum von freigelegtem Haftklebstoff umgeben sind und so nach wie vor eine gute Barrierewirkung gegen Luft und Dampf gewährleisten können.

Darüber hinaus wurde überraschend gefunden, dass sich die geschwächten Bereiche so auf der Oberfläche von Folien anordnen lassen, dass das zusammen mit dem Haftklebstoff abgezogene und auf der selbstklebenden Oberfläche des Haftklebstoffs verbleibende Release-Material die Haftklebewirkung des Haftklebstoffs nur geringfügig beeinträchtigt und zu keinen signifikanten Einbußen führt.

Außerdem wurde überraschend gefunden, dass bei gegen sich selbst gewickelten Folien, z.B. Klebebändern, die beim Abrollen innerhalb des Release-Materials in den geschwächten Bereichen entstehenden Fehlstellen sich vorteilhaft für eine Haftung bei überlappender Verklebung der Folien, z.B. Klebebänder auswirken. Dabei wird dieser Vorteil nicht durch die mit Release-Material bedeckten und damit in ihrer Haftklebewirkung beeinträchtigten Bereiche des Haftklebstoffs auf der gegenüberliegenden Oberflächenseite aufgehoben.

Die erfindungsgemäße Folie ist typischerweise ein aus Kunststoff in Bahnen hergestelltes, vergleichsweise dünnes Material.

Die erfindungsgemäße Folie umfasst eine Trägerschicht, welche ggf. mehrlagig sein kann, wobei die einzelnen Lagen aus unterschiedlichen Materialien hergestellt sein können und eine unterschiedliche Dicke aufweisen können. Beispielsweise kann die Trägerschicht dreilagig ausgebildet sein, d.h. eine innere Lage zwischen zwei äußeren Lagen umfassen. Es ist erfindungsgemäß aber auch möglich, dass die Trägerschicht aus nur einer einzelnen Lage besteht. Erfindungsgemäß bevorzugt umfasst die erfindungsgemäße Trägerschicht 1, 2, 3, 4, 5, 6 oder 7 Lagen. Ist die erfindungsgemäße Trägerschicht mehrlagig ausgebildet, kann sie hinsichtlich ihrer Lagen im Querschnitt symmetrisch oder asymmetrisch aufgebaut sein, wobei sich die Symmetrie sowohl auf das jeweilige Material als auch auf dessen Dicke erstreckt. Ein symmetrischer Aufbau ist bevorzugt.

In einer bevorzugten Ausführungsform besteht die Trägerschicht nur aus einer einlagigen Kunststofffolie. In einer weiteren bevorzugten Ausführungsform kann die Trägerschicht mehrlagig, bevorzugt mindestens zweilagig sein.

Die Trägerschicht weist eine erste Oberflächenseite und eine gegenüberliegende zweite Oberflächenseite auf. Ist die Trägerschicht mehrlagig, so bildet die eine Außenlage der mehrlagigen Trägerschicht die erste Oberflächenseite der Trägerschicht und die andere Außenlage der mehrlagigen Trägerschicht die zweite Oberflächenseite der Trägerschicht.

Eine der beiden Oberflächenseiten der Trägerschicht, zur Unterscheidbarkeit von der anderen der beiden Oberflächenseiten als "zweite Oberflächenseite" bezeichnet, ist teilflächig modifiziert, und zwar (i) durch Oberflächenaktivierung oder (ii) durch Bedruckung mit einem Bedruckungsmittel, so dass in beiden Fällen (i) und (ii) die zweite Oberflächenseite jeweils modifizierte Bereiche sowie nicht modifizierte Bereiche aufweist.

Zur Oberflächenaktivierung im Sinne der Erfindung kommen grundsätzlich alle gängigen Verfahren in Betracht, welche einem Fachmann bekannt sind und für welche geeignete Vorrichtungen kommerziell verfügbar sind, insbesondere Flammen-Behandlung, Plasma-Behandlung und/oder Corona-Behandlung. Durch diese Verfahren werden die Haftungseigenschaften verbessert und anschließend aufgebrachte Materialien können mit verbesserter Haftung auf die Trägerschicht aufgebracht werden.

Als Bedruckungsmittel im Sinne der Erfindung kommen grundsätzlich alle Materialien in Betracht, mit denen Kunststofffolien bedruckt werden können, insbesondere Lacke, welche einem Fachmann bekannt und kommerziell verfügbar sind. Das Bedruckungsmittel kann mehrere Komponenten umfassen, z.B. unterschiedliche Lacke mit ggf. unterschiedlicher Farbe, welche übereinander an denselben Stellen und/oder an unterschiedlichen Stellen der zweiten Oberflächenseite aufgedruckt sein können.

Die erfindungsgemäße lokale Deaktivierung von Releasbeschichtungen kann durch unterschiedliche, bevorzugte Konzepte verwirklicht werden, welche eine Oberflächenaktivierung und ggf. zusätzlich auch eine Bedruckung mit einem Bedruckungsmittel umfassen:
(i) teilflächige Oberflächenaktivierung und anschließendes vollflächiges Beschichten mit Release-Material; die lokale Deaktivierung der Releaseschichtung basiert dann auf der nur geringfügigen Haftung des Release-Materials auf der Trägerschicht in den nicht zuvor oberflächenaktivierten Bereichen;
(ii) teilflächiges Bedrucken mit einem Bedruckungsmittel, nachfolgende vollflächige Oberflächenaktivierung und anschließendes vollflächiges Beschichten mit Release-Material; die lokale Deaktivierung der Releaseschichtung basiert dann auf der nur geringen Haftung des Bedruckungsmittels auf der Trägerschicht in den zuvor bedruckten Bereichen, welche beim Bedrucken nicht oberflächenaktiviert waren; in den bedruckten Bereichen wird das Release-Material zusammen mit dem darunterliegenden Bedruckungsmittel von der Trägerschicht abgelöst; und
(iii) vollflächige Oberflächenaktivierung, nachfolgendes teilflächiges Bedrucken mit einem Bedruckungsmittel, und anschließendes vollflächiges Beschichten mit Release-Material; die lokale Deaktivierung der Releaseschichtung basiert dann auf der nur geringen Haftung des Release-Materials auf dem Bedruckungsmittel in den zuvor bedruckten Bereichen, welche vor dem Bedrucken oberflächenaktiviert worden waren; in den bedruckten Bereichen wird das Release-Material von dem darunterliegenden Bedruckungsmittel abgelöst, welches seinerseits auf der Trägerschicht verbleibt.

Ein Fachmann erkennt, dass sich die Konzepte (i) bis (iii) durch Einstellen der jeweiligen Haftkraft der einzelnen Materialien untereinander verwirklichen lassen und dass die lokale Deaktivierung der Releasebeschichtung auf einer zuvor festgelegten Sollbruchstelle basiert. Diese Sollbruchstelle weist die geringste Haftkraft der dort unmittelbar in Kontakt stehenden Materialien der Folie auf. Die jeweiligen Haftkräfte lassen sich durch die Wahl der Materialien, durch die Wahl der Oberflächenaktivierung, durch die zeitliche Abfolge der Herstellungsschritte sowie durch die Wahl des Haftklebstoffs gezielt beeinflussen und durch übliche Routineversuche anpassen. Geeignete Materialien sind kommerziell verfügbar und übliche Haftkräfte dieser Materialien gegen andere Materialien werden von den Herstellern angegeben.

Erfolgt die teilflächige Modifizierung durch Oberflächenaktivierung, so werden die modifizierten Bereiche erfindungsgemäß auch als *"oberflächenaktivierte Bereiche"* und die nicht modifizierten Bereiche auch als *"nicht oberflächenaktivierte Bereiche"* bezeichnet. Erfolgt die teilflächige Modifizierung durch Bedruckung mit einem Bedruckungsmittel, so werden die modifizierten Bereiche erfindungsgemäß auch als *"bedruckte Bereiche"* und die nicht modifizierten Bereiche auch als *"nicht bedruckte Bereiche"* bezeichnet. Sofern zunächst eine (ggf. vollflächige) Oberflächenaktivierung und anschließend eine teilflächige Bedruckung mit einem Bedruckungsmittel erfolgt, werden die modifizierten Bereiche erfindungsgemäß auch als *"bedruckte oberflächenaktivierte Bereiche"* und die nicht modifizierten Bereiche auch als *"nicht bedruckte oberflächenaktivierte Bereiche"* bezeichnet. Sofern zunächst eine teilflächige Bedruckung mit einem Bedruckungsmittel und anschließend eine (ggf. vollflächige) Oberflächenaktivierung erfolgt, werden die modifizierten Bereiche erfindungsgemäß auch als *"oberflächenaktivierte bedruckte Bereiche"* und die nicht modifizierten Bereiche auch als *"oberflächenaktivierte nicht bedruckte Bereiche"* bezeichnet.

Die modifizierten Bereiche sowie die nicht modifizierten Bereiche sind erfindungsgemäß teilflächig oder vollflächig mit einem Release-Material beschichtet. Vorzugsweise ist die Beschichtung vollflächig, d.h. die zweite Oberflächenseite der Trägerschicht ist vorzugsweise vollflächig mit dem Release-Material beschichtet, wobei diese Beschichtung bevorzugt eine der beiden Außenseiten der Folie bildet.

Die Haftung des Release-Materials gegen die Trägerschicht in den modifizierten Bereichen ist unterschiedlich stark im Vergleich zur Haftung des Release-Materials gegen die Trägerschicht in den nicht modifizierten Bereichen. Die Haftung z.B. des Release-Materials *"gegen die Trägerschicht"* ist erfindungsgemäß zu unterscheiden von der Haftung z.B. des Release-Materials *"an der Trägerschicht"* (= Haftung *"auf der Trägerschicht"*)*.* Während die Haftung des Release-Materials *"an der Trägerschicht"* (= Haftung *"auf der Trägerschicht"*) einen unmittelbaren Kontakt des Release-Materials und der Trägerschicht erfordert, ist es bei der Haftung des Release-Materials *"gegen die Trägerschicht"* zusätzlich möglich, dass sich zwischen der Trägerschicht und dem Release-Material ein weiteres Material befindet, erfindungsgemäß bevorzugt ein Bedruckungsmittel. Beim Ablösen eines solchen Release-Materials, welche nur mittelbar durch ein Bedruckungsmittel gegen die Trägerschicht haftet, kann das Bedruckungsmittel entweder zusammen mit dem Release-Material abgelöst werden (Konzept (ii)) oder aber auf der Trägerschicht verbleiben (Konzept (iii)).

Bevorzugt beträgt der relative Unterschied zwischen der Haftung des Release-Materials gegen die Trägerschicht in den modifizierten Bereichen und der Haftung des Release-Materials gegen die Trägerschicht in den nicht modifizierten Bereichen mindestens ±1 N/cm gemäß EN ISO 11339, bevorzugt mindestens ±2 N/cm, oder mindestens ±3 N/cm, oder mindestens ±4 N/cm, oder mindestens ±5 N/cm, oder mindestens ±6 N/cm, oder mindestens ±7 N/cm.

Bevorzugt sind die modifizierten Bereiche sowie die nicht modifizierten Bereiche jeweils vollflächig mit dem Release-Material beschichtet.

In einer bevorzugten Ausführungsform ist die Gesamtfläche aller modifizierten Bereiche kleiner als die Gesamtfläche aller nicht modifizierten Bereiche. Bevorzugt beträgt die Gesamtfläche aller modifizierten Bereiche höchstens 45%, oder höchstens 40%, oder höchstens 35%, oder höchstens 30%, oder höchstens 25%, oder höchstens 20%, oder höchstens 15%, oder höchstens 10%, oder höchstens 5% der Gesamtfläche der zweiten Oberflächenseite der Trägerschicht.

In einer anderen bevorzugten Ausführungsform ist die Gesamtfläche aller modifizierten Bereiche größer als die Gesamtfläche aller nicht modifizierten Bereiche. Bevorzugt beträgt die Gesamtfläche aller modifizierten Bereiche mindestens 55%, oder mindestens 60%, oder mindestens 65%, oder mindestens 70%, oder mindestens 75%, oder mindestens 80%, oder mindestens 85%, oder mindestens 90%, oder mindestens 95% der Gesamtfläche der zweiten Oberflächenseite der Trägerschicht.

Bevorzugt bilden die modifizierten Bereiche ein gleichmäßiges, wiederkehrendes Muster.

In einer bevorzugten Ausführungsform sind die modifizierten Bereiche jeweils vollflächig von nicht modifizierten Bereiche umgeben. In einer anderen bevorzugten Ausführungsform sind die nicht modifizierten Bereiche jeweils vollflächig von modifizierten Bereiche umgeben. Diese Ausführungsformen sind insbesondere dann von Vorteil, wenn eine Dichtigkeit gewährleistet werden soll, beispielsweise gegen Wasser, Dampf und/oder Luft, wie es z.B. bei Klebebändern für den Baubereich wünschenswert sein kann.

In einer weiteren bevorzugten Ausführungsform erstrecken sich die modifizierten Bereiche jeweils über die gesamte Quer- oder Längsausdehnung der erfindungsgemäßen Folie, ggf. nach deren Zuschnitt auf die gewünschte Breite bzw. Länge. Diese Ausführungsformen sind insbesondere dann von Vorteil, wenn eine Durchlässigkeit gewährleistet werden soll, beispielsweise gegen Wasser, Dampf und/oder Luft, wie es z.B. bei Bitumenbahnen für den Baubereich wünschenswert sein kann.

Bevorzugt basiert die Trägerschicht bzw. zumindest eine Lage der ggf. mehrlagigen Trägerschicht auf einem Material ausgewählt aus der Gruppe bestehend aus Polyolefin (z.B. Polyethylen, Polypropylen), Polyamid, Polyester, Elastomer, Papier, textilen Flächengebilden (z.B. Gewebe, Gewirke, Tyrak).

Vorzugsweise besteht die Trägerschicht zumindest zu 95 Gew.-% aus C₂-C₈-Olefinpolymeren, deren Mischungen oder Copolymeren.

Die Trägerschicht kann monoaxial oder biaxial gereckt sein, ist bevorzugt jedoch nicht gereckt.

Bevorzugte Polyolefine sind Polyolefine und/oder Olefin-Copolymere von α,β-ungesättigten Olefinen mit 2-8 Kohlenstoffatomen. Die Polyolefine sind bevorzugt ausgewählt aus der Gruppe bestehend aus Polyethylen (PE); vorzugsweise Polyethylen niedriger Dichte zwischen 0,86 und 0,93 g/cm³ (LDPE); lineares Polyethylen niedriger Dichte zwischen 0,86 und 0,94 g/cm³ (LLDPE), welches neben Ethylen als Comonomer ein oder mehrere α-Olefine mit 3-8 Kohlenstoffatomen enthalten kann; Polyethylen mittlerer Dichte zwischen 0,926 und 0,94 g/cm³ (MDPE); Polyethylen hoher Dichte zwischen 0,94 und 0,97 g/cm³ (HDPE); oder Ethylen-Copolymere mit einem α-Olefin mit 4 oder mehr Kohlenstoffatomen, vorzugsweise 6 und/oder 8 Kohlenstoffatomen, (mPE); Polypropylene (PP) oder Propylenethylen-Copolymere mit vorzugsweise bis zu 20 Gew.-% Ethylen. Als Polypropylen eignen sich vorzugsweise isotaktische Propylenhomopolymere mit einem Schmelzpunkt von 140-170°C, vorzugsweise 150-165°C. Weiterhin können als Propylencopolymere wenigstens ein Copolymeres von Propylen und bis zu 20 Gew.-%, vorzugsweise 10 Gew.-%, bezogen auf das Copolymer, Ethylen als Mischungskomponente eingesetzt werden.

Die Lage(n) der Trägerschicht können jeweils dieselben oder unterschiedliche Additive bzw. Hilfsmittel aufweisen ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Weichmacher, Silane, Abstandshalter, Füllstoffe, wie CaCO₃, Silikate, Peel-Additive, Siegel-Additive, Wachse, Benetzungsmittel, oberflächenaktive Verbindungen, vorzugsweise Tenside, und Dispergiermittel.

Die Lage(n) der Trägerschicht können wenigstens 0,01-15 Gew.-%, vorzugsweise wenigstens 0,1-10 Gew.-%, jeweils bezogen auf das Gesamtgewicht einer einzelnen Lage, wenigstens eines der vorstehend genannten Additive enthalten.

Bevorzugt weist die ggf. mehrlagige Trägerschicht insgesamt eine mittlere Schichtdicke auf im Bereich von 10 µm bis 200 µm, bevorzugt 50 µm bis 200 µm, bevorzugter 60 µm bis 150 µm, besonders bevorzugt 70 µm bis 90 µm.

Die erfindungsgemäße Folie weist zur Verbesserung ihrer Trennwirkung auf der zweiten Oberflächenseite der Folie eine Beschichtung mit einem Release-Material auf.

Vorzugsweise basiert die Beschichtung auf einem ausgehärteten Release-Material, vorzugsweise einer Polysiloxan-Beschichtung, welche auf wenigstens einer Oberfläche der erfindungsgemäßen Folie im Wesentlichen vollflächig, vorzugsweise mit Ausnahme bis auf wenigstens einen in Maschinenrichtung verlaufenden Streifen oder teilflächig, vorzugsweise als rapportgenauer Querstreifen aufgebracht ist.

Bevorzugt basiert das Release-Material auf einem Material ausgewählt aus der Gruppe bestehend aus thermisch härtenden Polysiloxanen, photochemisch härtenden Polysiloxanen (z.B. photochemisch radikalisch oder photochemisch kationisch) und deren Mischung (d.h. thermisch härtenden Polysiloxanen und/oder photochemisch härtenden Polysiloxanen).

Unter dem Begriff *"Polysiloxan"* werden im Sinne der Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R²)-O]-)n, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert das ausgehärtete Release-Material auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist das erfindungsgemäße Release-Material eine vernetzte ring- oder kettenförmige, besonders bevorzugt eine vernetzte kettenförmige Struktur auf, welche durch (D)-, (T)-, und/oder (Q)-Einheiten zu einem zwei- oder dreidimensionalen Netzwerk verknüpft ist. Die Anzahl n der wiederkehrenden Siloxan-Einheiten [Si(R²)-O]-)n in der Polysiloxankette wird als Polymerisationsgrad des Polysiloxans bezeichnet.

Das ausgehärtete Release-Material der erfindungsgemäßen Folie basiert vorzugsweise auf wenigstens einem ausgehärteten, d.h. vernetzten Polysiloxan ausgewählt aus der Gruppe umfassend additionsvernetzte, vorzugsweise metallkatalysiert additionsvernetzte, kondensationsvernetzte, radikalisch vernetzte und/oder kationisch vernetzte Polysiloxane.

Besonders bevorzugt basiert das Release-Material auf wenigstens einem ausgehärteten Polysiloxan, wobei die Aushärtung thermisch und/oder unter Einwirkung von UV-Strahlung induziert wurde.

In einer bevorzugten Ausführungsform basiert das Release-Material auf wenigstens einer Silikonkomponente ausgewählt aus der Gruppe bestehend aus acrylmodifizierten Polysiloxanen und Epoxysiloxanen, wobei deren Aushärtung jeweils durch UV Strahlung induziert wird. UVausgehärtete Silikonkomponenten können durch photokatalytisch induzierte radikalische Reaktion von acrylmodifizierten Polysiloxanen und/oder durch photokatalytisch induzierte kationische Reaktion von Epoxysiloxanen erhalten werden.

In einer anderen bevorzugten Ausführungsform basiert das Release-Material auf wenigstens einem ausgehärteten Polysiloxan ausgewählt aus der Gruppe bestehend aus Polydialkylsiloxanen, vorzugsweise Polydimethylsiloxanen, und Polyalkylarylsiloxanen, vorzugsweise Polymethylphenylsiloxane, deren Aushärtung jeweils thermisch induziert wird. Thermisch ausgehärtete Polysiloxane können durch thermische Hydrosilylierung von Silan-Funktionen aufweisenden Polysiloxanen mit einer zumindest eine Kohlenstoff-Doppelbindung aufweisenden Verbindung oder durch eine Kondensationsreaktion von entsprechend modifizierten Polysiloxanen erhalten werden.

Die UV-Aushärtung erfolgt wie auch die thermische Aushärtung nach der Herstellung der erfindungsgemäßen Folie, wobei eine thermische Aushärtung erfindungsgemäß bevorzugt ist.

Bevorzugt weist das Release-Material ein mittleres Flächengewicht auf im Bereich von 0,1 g/m² bis 2 g/m², bevorzugter 0,3 g/m² bis 1 g/m².

Bevorzugt weist die Folie eine Gesamtschichtdicke auf im Bereich von 10 µm bis 200 µm, bevorzugt 50 µm bis 200 µm, bevorzugter 60 µm bis 150 µm, besonders bevorzugt 70 µm bis 90 µm.

In einer bevorzugten Ausführungsform (Konzept (i)) ist die Haftung des Release-Materials gegen die Trägerschicht in den modifizierten Bereichen stärker als die Haftung des Release-Materials gegen die Trägerschicht in den nicht modifizierten Bereichen.

Bevorzugt ist dabei die Modifizierung der modifizierten Bereiche durch Oberflächenaktivierung erfolgt, so dass die modifizierten Bereiche oberflächenaktivierte Bereiche sind und die nicht modifizierten Bereiche nicht oberflächenaktivierte Bereiche sind; und wobei die oberflächenaktivierten Bereiche sowie die nicht oberflächenaktivierten Bereiche teilflächig oder vollflächig mit dem Release-Material beschichtet sind.

Bevorzugt ist die Oberflächenaktivierung ausgewählt aus der Gruppe bestehend aus Plasmabehandlung, Coronabehandlung, Flammenbehandlung, und deren Kombinationen.

In einer anderen bevorzugten Ausführungsform (Konzept (ii) oder (iii)) ist die Haftung des Release-Materials gegen die Trägerschicht in den modifizierten Bereichen schwächer als die Haftung des Release-Materials gegen die Trägerschicht in den nicht modifizierten Bereichen.

Bevorzugt ist dabei die Modifizierung der modifizierten Bereiche durch Bedruckung mit einem Bedruckungsmittel erfolgt, so dass die modifizierten Bereiche bedruckte Bereiche sind und die nicht modifizierten Bereiche nicht bedruckte Bereiche sind; und wobei die bedruckten Bereiche sowie die nicht bedruckten Bereiche teilflächig oder vollflächig mit dem Release-Material beschichtet sind.

Bevorzugt sind die Haftung des Release-Materials auf dem Bedruckungsmittel in den bedruckten Bereichen und die Haftung des Release-Materials auf der zweiten Oberflächenseite in den nicht bedruckten Bereiche jeweils stärker als die Haftung des Bedruckungsmittels auf der zweiten Oberflächenseite in den bedruckten Bereichen.

Bevorzugt basiert das Bedruckungsmittel auf einem Material ausgewählt aus der Gruppe bestehend aus Einkomponenten-Lacken, Zweikomponenten-Lacken, wasserbasierenden Lacken, lösungsmittelbasierenden Lacken, thermisch vernetzenden Lacken, photochemisch vernetzenden Lacken, radikalisch vernetzenden Lacken, kationisch vernetzenden Lacken, Lacken auf Basis von Acrylaten, Lacken auf Basis von Polyvinylchlorid (PVC), Lacken auf Basis von Polyvinyldichlorid (PVDC), Lacken auf Basis von Polyurethan, Lacken auf Basis von Polyamid, und/oder Lacken auf Basis von Nitrocellulose.

Bevorzugt weist das Bedruckungsmittel in den bedruckten Bereichen ein mittleres Flächengewicht aufweist im Bereich von 0,5 g/m² bis 10 g/m².

In einer bevorzugten Ausführungsform ist die erste Oberflächenseite teilflächig oder vollflächig mit einem Haftklebstoff beschichtet ist. Dies ist besonders vorteilhaft, wenn die erfindungsgemäße Folie gegen sich selbst gewickelt werden soll bzw. ist.

Bevorzugt ist die erste Oberflächenseite vollflächig mit dem Haftklebstoff beschichtet.

Bevorzugt basiert der Haftklebstoff auf einem Material ausgewählt aus der Gruppe bestehend aus acrylatbasierten Haftklebstoffen, kautschukbasierten Haftklebstoffen, polyisobutylenbasierten Haftklebstoffen, und Hotmelts (z.B. SBS-Blockcopolymerisaten).

Bevorzugt weist der Haftklebstoff ein mittleres Flächengewicht auf im Bereich von 50 g/m² bis 500 g/m², bevorzugter 50 g/m² bis 400 g/m², noch bevorzugter 50 g/m² bis 300 g/m², besonders bevorzugt 150 g/m² bis 300 g/m².

Bevorzugt ist in einem Zustand, bei dem der Haftklebstoff an dem Release-Material haftet, die Haftung des Release-Materials auf der zweiten Oberflächenseite in den nicht modifizierten Bereichen schwächer als die Haftung des Haftklebstoffs auf dem Release-Material.

Bevorzugt ist in einem Zustand, bei dem der Haftklebstoff an dem Release-Material haftet, die Haftung des Release-Materials auf der zweiten Oberflächenseite in den modifizierten Bereichen stärker als die Haftung des Haftklebstoffs auf dem Release-Material.

Bevorzugt ist in einem Zustand, bei dem der Haftklebstoff an dem Release-Material haftet, die Haftung des Release-Materials auf der zweiten Oberflächenseite in den nicht modifizierten Bereichen stärker als die Haftung des Haftklebstoffs auf dem Release-Material.

Bevorzugt ist die Modifizierung der modifizierten Bereiche durch Bedruckung mit einem Bedruckungsmittel erfolgt, wobei in einem Zustand, bei dem der Haftklebstoff an dem Release-Material haftet, die Haftung des Haftklebstoffs auf dem Release-Material stärker ist als die Haftung des Bedruckungsmittels auf der zweiten Oberflächenseite in den bedruckten Bereichen.

Ein weiterer Aspekt der Erfindung betrifft ein Klebeband, welches die vorstehend beschriebene erfindungsgemäße Folie umfasst.

Die erfindungsgemäße Folie kann als selbstklebende Folie, vorzugsweise als Klebeband in Form einer Rolle bereitgestellt werden. Dazu weist die Folie auf einer ihrer beiden Oberflächenseiten eine Beschichtung aus einem Release-Material auf und auf der anderen ihrer beiden Oberflächenseiten eine Beschichtung aus einem Haftklebstoff. Wenn das Klebeband von der Rolle abgerollt wird, kommt es zum partiellen Ablösen des Release-Materials, welches partiell am Haftklebstoff haften bleibt. Dadurch wird einerseits der Haftklebstoff lokal deaktiviert, andererseits aber auch die Beschichtung mit dem Release-Material unterbrochen. Die Haftung des Klebebands auf sich selbst beim überlappenden Verkleben wird so verbessert, ohne dass es zu signifikanten Einbußen der Wirkung beim nicht überlappenden Verkleben kommt. Auf Release-Folien kann vollständig verzichtet werden.

Bevorzugt ist die Folie gegen sich selbst gewickelt und liegt als Rolle vor, so dass der Haftklebstoff an dem Release-Material haftet.

Bevorzugt ist die Modifizierung der modifizierten Bereiche durch Oberflächenaktivierung erfolgt, wobei das Klebeband derart konfektioniert ist, dass beim Abwickeln in den nicht oberflächenaktivierten Bereichen das Release-Material am Haftklebstoff haften bleibt und von der zweiten Oberflächenseite abgelöst wird, in den oberflächenaktivierten Bereichen der Haftklebstoff von dem Release-Material abgelöst wird; so dass innerhalb der Beschichtung der zweiten Oberflächenseite mit dem Release-Material in den nicht oberflächenaktivierten Bereichen Fehlstellen gebildet werden, welche kein Release-Material aufweisen, sondern an denen die zweite Oberflächenseite freigelegt ist; sowie auf der Beschichtung der ersten Oberflächenseite mit dem Haftklebstoff dazu entsprechende Bereiche gebildet werden, die mit dem abgelösten und daran haftenden Release-Material bedeckt sind.

Bevorzugt ist die Modifizierung der modifizierten Bereiche durch Bedruckung mit einem Bedruckungsmittel erfolgt, wobei das Klebeband derart konfektioniert ist, dass beim Abwickeln in den nicht bedruckten Bereichen der Haftklebstoff von dem Release-Material abgelöst wird, in den bedruckten Bereichen das Release-Material zusammen mit dem Bedruckungsmittel am Haftklebstoff haften bleibt und das Bedruckungsmittel von der zweiten Oberflächenseite abgelöst wird; so dass innerhalb der Beschichtung der zweiten Oberflächenseite mit dem Release-Material in den bedruckten Bereichen Fehlstellen gebildet werden, welche kein Release-Material aufweisen, sondern an denen die zweite Oberflächenseite freigelegt ist; sowie auf der Beschichtung der ersten Oberflächenseite mit dem Haftklebstoff dazu entsprechende Bereiche gebildet werden, die mit dem abgelösten und daran haftenden Release-Material und zusätzlich dem Bedruckungsmittel bedeckt sind.

Ein weiterer Aspekt der Erfindung betrifft die Verwendung einer vorstehend beschriebenen erfindungsgemäßen Folie oder eines vorstehend beschriebenen erfindungsgemäßen Klebebands zum Bekleben von Oberflächen und/oder zum Abdichten von Öffnungen.

Bevorzugt umfasst die Folie oder das Klebeband einen ersten Abschnitt und einen zweiten Abschnitt, welche in einer Weise überlappend verklebt werden, so dass zumindest eine Teilfläche des Haftklebstoffs des ersten Abschnitts im Bereich zumindest eines Teils der Fehlstellen des zweiten Abschnitts an der dort freigelegten zweiten Oberflächenseite haftet.

Ein weiterer Aspekt der Erfindung betrifft die Verwendung einer vorstehend beschriebenen erfindungsgemäßen Folie als Release-Folie. Dabei wird bevorzugt ein mit einem selbstklebenden Material ausgerüsteter Gegenstand mit der Release-Folie in einer Weise in Kontakt gebracht wird, so dass das selbstklebende Material vollflächig oder teilflächig an dem Release-Material der Release-Folie haftet, und wobei die Release-Folie und der Gegenstand danach bzw. später wieder voneinander getrennt werden, wodurch des selbstklebende Material wenigstens teilweise wieder von dem Release-Material abgelöst wird. Die Zeitspanne zwischen dem in Kontakt bringen (Anhaften) und dem Ablösen ist erfindungsgemäß nicht eingeschränkt und kann von Sekunden oder Jahre betragen.

In einer bevorzugten Ausführungsform ist die Modifizierung der modifizierten Bereiche durch Oberflächenaktivierung erfolgt, und die erfindungsgemäße Verwendung der Release-Folie erfolgt in einer Weise, dass beim Ablösen in nicht oberflächenaktivierten Bereichen das Release-Material am selbstklebenden Material haften bleibt und von der zweiten Oberflächenseite abgelöst wird, in oberflächenaktivierten Bereichen das selbstklebende Material von dem Release-Material abgelöst wird; so dass innerhalb der Beschichtung der zweiten Oberflächenseite mit dem Release-Material in den nicht oberflächenaktivierten Bereichen Fehlstellen gebildet werden, welche kein Release-Material aufweisen, sondern an denen die zweite Oberflächenseite freigelegt ist; sowie auf dem selbstklebenden Material des getrennten Gegenstands dazu entsprechende Bereiche gebildet werden, die mit dem abgelösten und daran haftenden Release-Material bedeckt sind.

In einer anderen bevorzugten Ausführungsform ist die Modifizierung der modifizierten Bereiche durch Bedruckung mit einem Bedruckungsmittel erfolgt, und die erfindungsgemäße Verwendung der Release-Folie erfolgt in einer Weise, dass beim Ablösen in nicht bedruckten Bereichen das selbstklebende Material von dem Release-Material abgelöst wird, in bedruckten Bereichen das Release-Material zusammen mit dem Bedruckungsmittel am selbstklebenden Material haften bleibt und das Bedruckungsmittel von der zweiten Oberflächenseite abgelöst wird; so dass innerhalb der Beschichtung der zweiten Oberflächenseite mit dem Release-Material in den bedruckten Bereichen Fehlstellen gebildet werden, welche kein Release-Material aufweisen, sondern an denen die zweite Oberflächenseite freigelegt ist; sowie auf dem selbstklebenden Material des getrennten Gegenstands dazu entsprechende Bereiche gebildet werden, die mit dem abgelösten und daran haftenden Release-Material und zusätzlich dem Bedruckungsmittel bedeckt sind.

Das selbstklebende Material ist bevorzugt ein Klebstoff gemäß DIN EN 923, d.h. ein nichtmetallischer Stoff, welcher Fügeteile durch Flächenhaftung (Adhäsion) und innere Festigkeit (Kohäsion) verbindet bzw. zur Erzeugung einer solchen Verbindung geeignet ist. Bevorzugt ist das selbstklebende Material ein chemisch härtender Klebstoff oder ein physikalisch abbindender Klebstoff. Bevorzugt ist das selbstklebende Material ausgewählt aus Reaktivklebstoffen, Haftklebstoffen, Schmelzklebstoffen und Dispersionsklebstoffen.

Bevorzugt ist der Gegenstand ausgewählt aus Klebebändern und Bitumenbahnen.

Ein weiterer Aspekt der Erfindung betrifft ein System, welches einen mit einem selbstklebenden Material ausgerüsteten Gegenstand sowie eine vorstehend beschriebene erfindungsgemäße Folie umfasst, wobei die Folie das selbstklebende Material bedeckt und wobei das Release-Material der Folie dem selbstklebenden Material des Gegenstands zugewandt ist und daran haftet. Der Gegenstand kann beispielsweise eine selbstklebend ausgerüstete Bitumenbahn ausgestaltet sein, wobei die erfindungsgemäße Folie als Release-Folie für die selbstklebende Oberfläche der Bitumenbahn dient. Bevorzugt ist das selbstklebende Material ausgewählt aus Reaktivklebstoffen, Haftklebstoffen, Schmelzklebstoffen und Dispersionsklebstoffen.

Ein weiterer Aspekt der Erfindung betrifft Verfahren zur Herstellung der vorstehend beschriebenen erfindungsgemäßen Folie umfassend die aufeinander folgenden Schritte
(i) Bereitstellen einer ggf. mehrlagigen Trägerschicht mit einer ersten Oberflächenseite und einer gegenüberliegenden zweiten Oberflächenseite;
(ii) teilflächiges Modifizieren der zweiten Oberflächenseite entweder durch Oberflächenaktivierung oder durch Bedruckung mit einem Bedruckungsmittel, so dass auf der zweiten Oberflächenseite modifizierte Bereiche sowie nicht modifizierte Bereiche erzeugt werden; und
(iii) teilflächiges oder vollflächiges Beschichten der modifizierten Bereiche sowie der nicht modifizierten Bereiche mit einem Release-Material.

Prinzipiell kann die Herstellung der erfindungsgemäßen Folie nach bekannten Herstellungsverfahren wie z. B. durch Extrusion oder durch Co-Extrusion erfolgen.

Dabei kann die Trägerschicht ggf. mit allen ihren Lagen durch Extrusion, insbesondere durch Blasfolien-Extrusion und/oder Flachfolien-Extrusion (Cast-Extrusion), oder Co-Extrusion, vorzugsweise Blasfolien-Co-Extrusion und/oder Flachfolien-Co-Extrusion (Cast-Co-Extrusion) hergestellt werden, wobei Blasfolien-(Co)-Extrusion bevorzugt ist. Dabei ist zu beachten, dass im Fall einer Dotierung einzelner Lagen mit Additiven, diese durch Abmischen, ggf. als Masterbatch, mit der oder den Polymer-Komponenten der jeweiligen Lage zur Verarbeitung eingesetzt werden. Dieses Abmischen kann in Granulat/Pulver- oder Granulat/Granulat-Form trocken erfolgen. Es ist aber auch möglich, das Additiv dem oder den aufgeschmolzenen Polymer-Komponente(n) der jeweiligen Lage zuzugeben, vorzugsweise durch Zudosierung in einem für die Extrusion der jeweiligen Schicht verwendeten Extruder.

Bei der Herstellung durch Extrusion wird die einlagige Trägerschicht bzw. werden die den einzelnen Lagen der mehrlagigen Trägerschicht entsprechenden Schmelzen gleichzeitig und gemeinsam durch eine Runddüse oder eine Flachdüse (co)extrudiert, die so erhaltene Trägerschicht bei Nutzung einer Runddüse mittels Luft aufgeblasen und gekühlt oder bei Nutzung einer Flachdüse zur Verfestigung mit Hilfe von Walzen abgezogen und gekühlt.

Anschließend wird auf zumindest eine Oberflächenseite der Trägerschicht gegebenenfalls nach Zwischenlagerung eine Beschichtung mit dem Release-Material aufgetragen.

Die erfindungsgemäße Folie kann geprägt sein und eine einseitige Prägestruktur auf einer ihrer Oberflächen-Schichten oder eine durchgehende Prägestruktur, mit einer entsprechenden männlichen und weiblichen Seite, aufweisen.

Die Prägung der erfindungsgemäßen Folie kann im Flachfolien-Extrusionsverfahren einseitig inline hergestellt werden. Dabei wird die Polymerschmelze durch den Düsenspalt auf eine strukturierte, gekühlte Walze aufgegossen und mittels Gegenwalzen zu einer Folie geformt. Die strukturierte Walze überträgt ihre Struktur nur auf die eine Seite der Folie.

Die Prägung der erfindungsgemäßen Folie kann im Blasfolien-Extrusionsverfahren durchgehend inline hergestellt werden. Dabei wird die Folie vorgeheizt durch einen Prägespalt zwischen einer strukturierten gekühlten Stahlwalze und einer unstrukturierten Gummiwalze gezogen. Die Stahlwalze überträgt die Struktur der Stahlwalze auf die Stahlwalzenseite der Folie, wobei sich dabei durch die elastische Gummiwalze auf der Gegenseite auf der Gummiwalzenseite eine negative Struktur der Struktur der Stahlwalze abbildet.

Die Prägung der erfindungsgemäßen Folie kann auch nach dem Blasfolien-Extrusionsverfahren oder Flachfolien-Extrusionsverfahren offline durchgehend hergestellt werden. Dabei wir die Folie in einem weiteren Verfahrensschritt vorgeheizt durch einen Prägespalt zwischen einer strukturierten, gekühlten Stahlwalze und einer unstrukturierten Gummiwalze gezogen. Die Stahlwalze überträgt die Struktur der Stahlwalze auf die Stahlwalzenseite der Folie, wobei sich dabei durch die elastische Gummiwalze auf der Gegenseite auf der Gummiwalzenseite eine negative Struktur der Struktur der Stahlwalze abbildet.

Die Erstellung der einzuprägenden Struktur erfolgt nach den dem Fachmann bekannten und üblichen Verfahren, wobei je nach Struktur und Materialien spezifische Verfahren besonders vorteilhaft sein können. Grundsätzlich können die Strukturen auf der Prägewalze entweder eine durchgehende Struktur haben oder aber als unterbrochene Struktur (Abfolge von Einzelprägestrukturen) ausgebildet sein, wobei auch eine Kombination beider Strukturen möglich ist. Die jeweiligen Strukturen auf der Prägewalze können die unterschiedlichsten geometrischen Formen aufweisen, je nach beabsichtigter (asymmetrischer) Struktur der Kunststofffolie. Dabei ist eine regelmäßige Struktur bevorzugt.

Bevorzugt ist die erfindungsgemäße Folie nicht geprägt.

In einer bevorzugten Ausführungsform des erfindungsgemäßen Verfahrens (Konzept (i)) erfolgt in Schritt (ii) ein teilflächiges Oberflächenaktivieren der zweiten Oberflächenseite, so dass auf der zweiten Oberflächenseite oberflächenaktivierte Bereiche sowie nicht oberflächenaktivierte Bereiche erzeugt werden; und wobei in Schritt (iii) ein teilflächiges oder vollflächiges Beschichten der oberflächenaktivierten Bereiche sowie der nicht oberflächenaktivierten Bereiche mit einem Release-Material erfolgt.

In einer anderen bevorzugten Ausführungsform des erfindungsgemäßen Verfahrens (Konzept (ii)) umfasst Schritt (ii) die aufeinander folgenden Teilschritte
(ii-1) teilflächiges Bedrucken der zweiten Oberflächenseite mit einem Bedruckungsmittel, so dass auf der zweiten Oberflächenseite bedruckte Bereiche sowie nicht bedruckte Bereiche erzeugt werden; und
(ii-2) teilflächiges oder vollflächiges Oberflächenaktivieren der zweiten Oberflächenseite, so dass auf der zweiten Oberflächenseite oberflächenaktivierte bedruckte Bereiche sowie oberflächenaktivierte nicht bedruckte Bereiche erzeugt werden; und
wobei in Schritt (iii) ein teilflächiges oder vollflächiges Beschichten der oberflächenaktivierten bedruckten Bereiche sowie der oberflächenaktivierten nicht bedruckten Bereiche mit einem Release-Material erfolgt.

In einer weiteren bevorzugten Ausführungsform des erfindungsgemäßen Verfahrens (Konzept (iii)) umfasst Schritt (ii) die aufeinander folgenden Teilschritte umfasst
(ii-a) teilflächiges oder vollflächiges Oberflächenaktivieren der zweiten Oberflächenseite, so dass auf der zweiten Oberflächenseite oberflächenaktivierte Bereiche sowie nicht oberflächenaktivierte Bereiche erzeugt werden; und
(ii-b) teilflächiges Bedrucken der zweiten Oberflächenseite mit einem Bedruckungsmittel, so dass auf der zweiten Oberflächenseite bedruckte oberflächenaktivierte Bereiche sowie nicht bedruckte oberflächenaktivierte Bereiche erzeugt werden; und
wobei in Schritt (iii) ein teilflächiges oder vollflächiges Beschichten der bedruckten oberflächen-aktivierten Bereiche (7d) sowie der nicht bedruckten oberflächenaktivierten Bereiche (8d) mit einem Release-Material erfolgt.

Die Erfindung wird durch die Abbildungen näher erläutert.

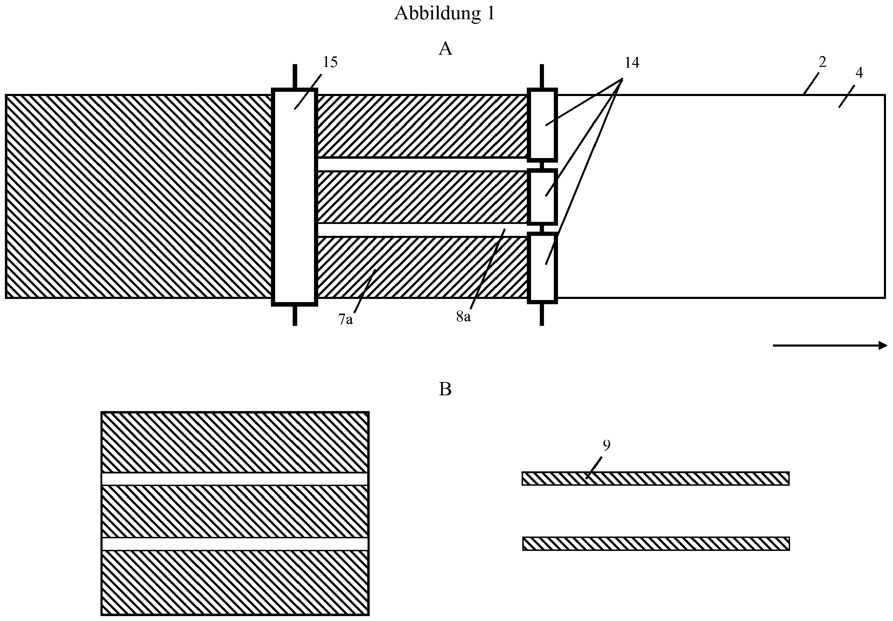

Abbildung 1A zeigt schematisch ein bevorzugtes Verfahren zur Herstellung der erfindungsgemäßen Folie (Konzept (i)) in der Draufsicht auf die zweite Oberflächenseite (4). Eine Bahn der Trägerschicht (2) wird in Pfeilrichtung nacheinander durch eine Vorrichtung zur Oberflächenaktivierung (14) sowie eine Vorrichtung zur Beschichtung mit Release-Material (15) geleitet. Die Oberflächenseite (4) der Trägerschicht (2) wird zunächst mit Hilfe der Vorrichtung zur Oberflächenaktivierung (14) teilflächig oberflächenaktiviert, so dass oberflächenaktivierte Bereiche (7a) und nicht oberflächenaktivierte Bereiche (8a) erzeugt werden. Anschließend werden mit Hilfe der Vorrichtung zur Beschichtung mit Release-Material (15) die oberflächenaktivierten Bereiche (7a) und die nicht oberflächenaktivierten Bereiche (8a) mit Release-Material beschichtet. In den nicht oberflächenaktivierten Bereichen (8a) ist die Haftung des Release-Materials an der Trägerschicht (2) schwächer als in den oberflächenaktivierten Bereichen (7a).

Abbildung 1B zeigt schematisch das lokale Ablösen der Release-Materials (9) von der Trägerschicht (2) in den nicht oberflächenaktivierten Bereichen (8a), z.B. nachdem ein Haftklebstoff vollflächig auf das Release-Material (9) aufgebracht und wieder abgelöst wurde. Einerseits ist dabei in den nicht oberflächenaktivierten Bereichen (8a) die Haftung des Haftklebstoffs an dem Release-Material (9) stärker als die Haftung des Release-Materials (9) an der Trägerschicht (2), so dass das Release-Material (9) zusammen mit dem Haftklebstoff abgelöst wird (Abbildung 1B rechts). Andererseits ist dabei in den oberflächenaktivierten Bereichen (7a) die Haftung des Haftklebstoffs an dem Release-Material (9) schwächer als die Haftung des Release-Materials (9) an der Trägerschicht (2), so dass der Haftklebstoff von dem Release-Material (9) abgelöst wird und dieses auf der Trägerschicht (2) verbleibt (Abbildung 1B links).

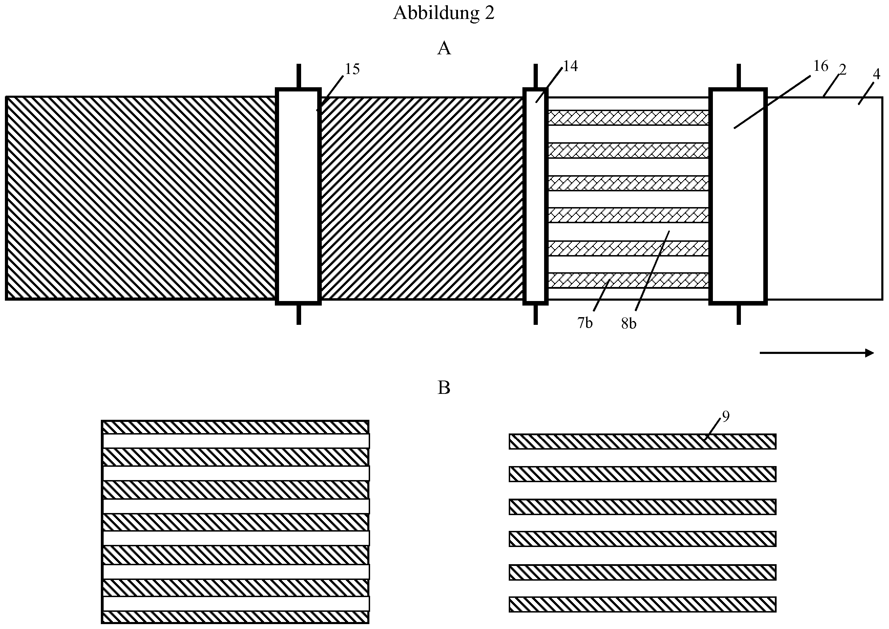

Abbildung 2A zeigt schematisch ein anderes bevorzugtes Verfahren zur Herstellung der erfindungsgemäßen Folie (Konzept (ii)) in der Draufsicht auf die zweite Oberflächenseite (4). Eine Bahn der Trägerschicht (2) wird in Pfeilrichtung nacheinander durch eine Vorrichtung zum Bedrucken mit einem Bedruckungsmittel (16), eine Vorrichtung zur Oberflächenaktivierung (14) sowie eine Vorrichtung zur Beschichtung mit Release-Material (15) geleitet. Die Oberflächenseite (4) der Trägerschicht (2) wird zunächst mit Hilfe der Vorrichtung zum Bedrucken mit einem Bedruckungsmittel (16) teilflächig mit einem Bedruckungsmittel (6) bedruckt, wodurch bedruckte Bereiche (7b) und nicht bedruckte Bereiche (8b) erzeugt werden. Danach wird die Oberflächenseite (4) der Trägerschicht (2) mit Hilfe der Vorrichtung zur Oberflächenaktivierung (14) vollflächig oberflächenaktiviert, so dass oberflächenaktivierte bedruckte Bereiche (7c) und oberflächenaktivierte nicht bedruckte Bereiche (8c) erzeugt werden. Anschließend werden mit Hilfe der Vorrichtung zur Beschichtung mit Release-Material (15) die oberflächenaktivierten bedruckten Bereiche (7c) und die nicht oberflächenaktivierten nicht bedruckten Bereiche (8c) vollflächig mit Release-Material (9) beschichtet. In den oberflächenaktivierten bedruckten Bereichen (8c) ist die Haftung des Bedruckungsmittels (6) (zusammen mit dem darüber befindlichen Release-Material (9)) an der Trägerschicht (2) schwächer als die Haftung des Release-Materials (9) an der Trägerschicht (2) in den oberflächenaktivierten nicht bedruckten Bereichen (7c).

Abbildung 2B zeigt schematisch das lokale Ablösen der Release-Materials (9) zusammen mit dem Bedruckungsmittel (6) von der Trägerschicht (2) in den oberflächenaktivierten bedruckten Bereichen (7c), z.B. nachdem ein Haftklebstoff vollflächig auf das Release-Material (9) aufgebracht und wieder abgelöst wurde. Einerseits sind dabei in den oberflächenaktivierten bedruckten Bereichen (7c) die Haftung des Haftklebstoffs an dem Release-Material (9) und die Haftung des Release-Materials (9) and dem Bedruckungsmittel (6) jeweils stärker als die Haftung des Bedruckungsmittels (6) an der Trägerschicht (2), so dass das Bedruckungsmittel (6) zusammen mit dem Release-Material (9) und dem Haftklebstoff abgelöst wird (Abbildung 2B rechts). Andererseits ist dabei in den oberflächenaktivierten nicht bedruckten Bereichen (8c) die Haftung des Haftklebstoffs an dem Release-Material (9) schwächer als die Haftung des Release-Materials (9) an der Trägerschicht (2), so dass der Haftklebstoff von dem Release-Material (9) abgelöst wird und dieses auf der Trägerschicht (2) verbleibt (Abbildung 2B links).

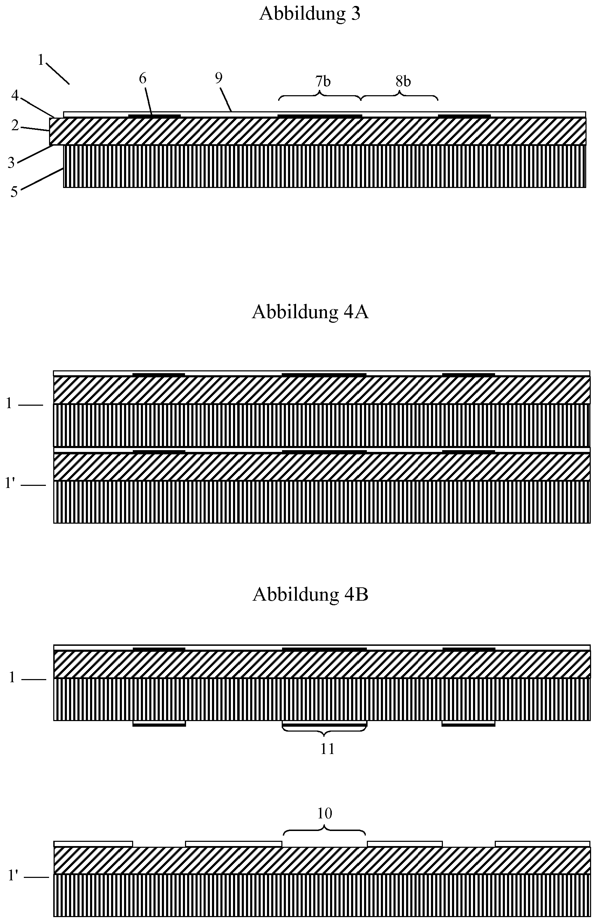

Abbildung 3 zeigt schematisch eine bevorzugte Ausführungsform der erfindungsgemäßen Folie (Konzept (ii)) im Querschnitt eines Klebebands. Die Folie (1) weist eine Trägerschicht (2) auf, welche auf ihrer ersten Oberflächenseite (3) mit einem Haftklebstoff (5) beschichtet ist. Die zweite Oberflächenseite (4) der Trägerschicht (5) ist in bedruckten Bereichen (7b) mit einem Bedruckungsmittel (6) bedruckt, wohingegen die nicht bedruckten Bereiche (8b) kein Bedruckungsmittel aufweisen. Sowohl die bedruckten Bereiche (7b) als auch die nicht bedruckten Bereiche (8b) sind mit einem Release-Material (9) beschichtet.

Abbildung 4A zeigt schematisch die Ausführungsform der erfindungsgemäßen Folie gemäß Abbildung 3 (Konzept (ii)) im Querschnitt, wobei zwei Streifen der Folie (1) und (1') gegen sich selbst geklebt sind, so dass der Haftklebstoff (5) der Folie (1) auf dem Release-Material (9) des Streifens (1') haftet.

Abbildung 4B zeigt schematisch die Ausführungsform der erfindungsgemäßen Folie gemäß Abbildung 4B, nachdem Folie (1) von Folie (1') abgezogen wurde. Die Modifizierung der modifizierten Bereiche (8) ist durch Bedruckung mit einem Bedruckungsmittel (6) erfolgt, wobei das Klebeband derart konfektioniert ist, dass beim Abwickeln in den nicht bedruckten Bereichen (8b) der Haftklebstoff (5) von dem Release-Material (9) abgelöst wird, in den bedruckten Bereichen (7b) das Release-Material (9) zusammen mit dem Bedruckungsmittel (6) am Haftklebstoff (5) haften bleibt und das Bedruckungsmittel (6) von der zweiten Oberflächenseite (4) der Trägerschicht (2) abgelöst wird; wodurch innerhalb der Beschichtung der zweiten Oberflächenseite (4) mit dem Release-Material (9) in den bedruckten Bereichen (7b) Fehlstellen (10) gebildet werden, welche kein Release-Material (9) aufweisen, sondern an denen die zweite Oberflächenseite (4) freigelegt ist; sowie auf der Beschichtung der ersten Oberflächenseite (3) mit dem Haftklebstoff (5) dazu entsprechende Bereiche (11) gebildet werden, die mit dem abgelösten und daran haftenden Release-Material (9) und zusätzlich dem Bedruckungsmittel (6) bedeckt sind

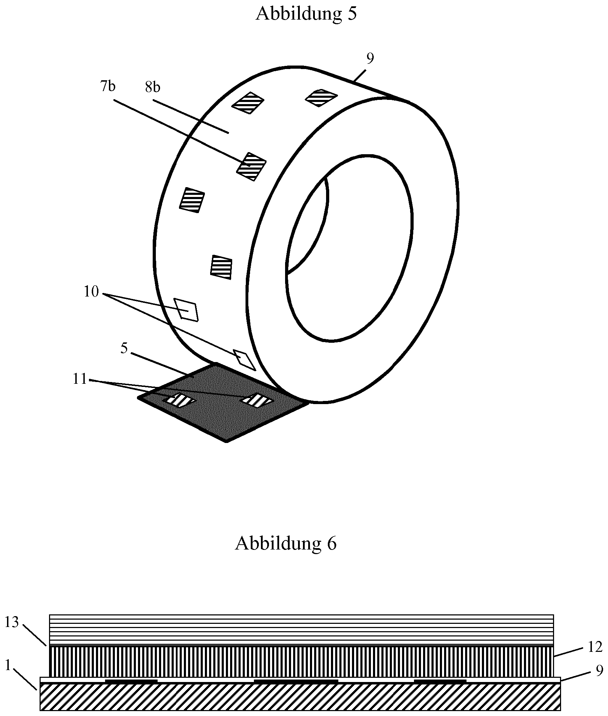

Abbildung 5 zeigt schematisch das Klebeband gemäß Abbildungen 4A/B in perspektivischer Ansicht mit den Fehlstellen (10), welche kein Release-Material (9) aufweisen, sondern an denen die zweite Oberflächenseite (4) freigelegt ist; sowie den entsprechenden Bereichen (11) auf dem Haftklebstoff (5), die mit dem abgelösten und daran haftenden Release-Material (9) und zusätzlich dem Bedruckungsmittel (6) bedeckt sind.

Abbildung 6 zeigt schematisch ein System, welches einen mit einem selbstklebenden Material (12) ausgerüsteten Gegenstand (13) umfasst sowie eine erfindungsgemäße Folie (1), wobei die Folie (1) das selbstklebende Material (12) bedeckt und wobei das Release-Material (9) der Folie (1) dem selbstklebenden Material (12) des Gegenstands (13) zugewandt ist und daran haftet.

### Bezugszeichenliste:

- 1: Folie
- 2: Trägerschicht
- 3: erste Oberflächenseite
- 4: zweite Oberflächenseite
- 5: Haftklebstoff
- 6: Bedruckungsmittel
- 7: modifizierte Bereiche
- 7a: oberflächenaktivierte Bereiche
- 7b: bedruckte Bereiche
- 7c: oberflächenaktivierte bedruckte Bereiche
- 7d: bedruckte oberflächenaktivierte Bereiche
- 8: nicht modifizierte Bereiche
- 8a: nicht oberflächenaktivierte Bereiche
- 8b: nicht bedruckte Bereiche
- 8c: oberflächenaktivierte nicht bedruckte Bereiche
- 8d: nicht bedruckte oberflächenaktivierte Bereiche
- 9: Release-Material
- 10: Fehlstellen
- 11: entsprechende Bereiche
- 12: selbstklebendes Material
- 13: Gegenstand
- 14: Vorrichtung zur Oberflächenaktivierung
- 15: Vorrichtung zur Beschichtung mit Release-Material
- 16: Vorrichtung zum Bedrucken mit einem Bedruckungsmittel

## Patentansprüche

1. Eine Folie (1) umfassend eine ggf. mehrlagige Trägerschicht (2) mit einer ersten Oberflächenseite (3) und einer gegenüberliegenden zweiten Oberflächenseite (4);
wobei die zweite Oberflächenseite (4) teilflächig entweder durch Oberflächenaktivierung oder durch Bedruckung mit einem Bedruckungsmittel (6) modifiziert ist, so dass die zweite Oberflächenseite (4) modifizierte Bereiche (7) sowie nicht modifizierte Bereiche (8) aufweist;
wobei die modifizierten Bereiche (7) sowie die nicht modifizierten Bereiche (8) teilflächig oder vollflächig mit einem Release-Material (9) beschichtet sind; und
wobei die Haftung des Release-Materials (9) gegen die Trägerschicht (2) in den modifizierten Bereichen (7) unterschiedlich stark ist im Vergleich zur Haftung des Release-Materials (9) gegen die Trägerschicht (2) in den nicht modifizierten Bereichen (8).

2. Die Folie (1) nach Anspruch 1, wobei die Haftung des Release-Materials (9) gegen die Trägerschicht (2) in den modifizierten Bereichen (7) schwächer ist als die Haftung des Release-Materials (9) gegen die Trägerschicht (2) in den nicht modifizierten Bereichen (8).

3. Die Folie (1) nach Anspruch 2, wobei die Modifizierung der modifizierten Bereiche (8) durch Bedruckung mit einem Bedruckungsmittel (6) erfolgt ist, so dass die modifizierten Bereiche (7) bedruckte Bereiche (7b) sind und die nicht modifizierten Bereiche (8) nicht bedruckte Bereiche (8b) sind; und wobei die bedruckten Bereiche (7b) sowie die nicht bedruckten Bereiche (8b) teilflächig oder vollflächig mit dem Release-Material (9) beschichtet sind.

4. Die Folie (1) nach Anspruch 3, wobei die Haftung des Release-Materials (9) auf dem Bedruckungsmittel (6) in den bedruckten Bereichen (7b) und die Haftung des Release-Materials (9) auf der zweiten Oberflächenseite (4) in den nicht bedruckten Bereiche (8b) jeweils stärker sind als die Haftung des Bedruckungsmittels (6) auf der zweiten Oberflächenseite (4) in den bedruckten Bereichen (7b).

5. Die Folie (1) nach einem der Ansprüche 2 bis 4, wobei das Bedruckungsmittel (6) auf einem Material basiert ausgewählt aus der Gruppe bestehend aus Einkomponenten-Lacken, Zweikomponenten-Lacken, wasserbasierenden Lacken, lösungsmittelbasierenden Lacken, thermisch vernetzenden Lacken, photochemisch vernetzenden Lacken, radikalisch vernetzenden Lacken, kationisch vernetzenden Lacken, Lacken auf Basis von Acrylaten, Lacken auf Basis von Polyvinylchlorid (PVC), Lacken auf Basis von Polyvinyldichlorid (PVDC), Lacken auf Basis von Polyurethan, Lacken auf Basis von Polyamid, und/oder Lacken auf Basis von Nitrocellulose.

6. Die Folie (1) nach einem der vorstehenden Ansprüche, wobei die erste Oberflächenseite (3) teilflächig oder vollflächig mit einem Haftklebstoff (5) beschichtet ist.

7. Die Folie (1) nach Anspruch 6, wobei in einem Zustand, bei dem der Haftklebstoff (5) an dem Release-Material (9) haftet, die Haftung des Release-Materials (9) auf der zweiten Oberflächenseite (4) in den nicht modifizierten Bereichen (8) stärker ist als die Haftung des Haftklebstoffs (5) auf dem Release-Material (9).

8. Die Folie (1) nach Anspruch 7, wobei die Modifizierung der modifizierten Bereiche (8) durch Bedruckung mit einem Bedruckungsmittel (6) erfolgt ist, wobei in einem Zustand, bei dem der Haftklebstoff (5) an dem Release-Material (9) haftet, die Haftung des Haftklebstoffs (5) auf dem Release-Material (9) stärker ist als die Haftung des Bedruckungsmittels (6) auf der zweiten Oberflächenseite (4) in den bedruckten Bereichen (7b).

9. Ein Klebeband umfassend eine Folie (1) nach einem der vorstehenden Ansprüche.

10. Das Klebeband nach Anspruch 9, wobei die Folie (1) gegen sich selbst gewickelt als Rolle vorliegt, so dass der Haftklebstoff (5) an dem Release-Material (9) haftet.

11. Das Klebeband nach Anspruch 10, wobei die Modifizierung der modifizierten Bereiche (8) durch Bedruckung mit einem Bedruckungsmittel (6) erfolgt ist, wobei das Klebeband derart konfektioniert ist, dass beim Abwickeln in nicht bedruckten Bereichen (8b) der Haftklebstoff (5) von dem Release-Material (9) abgelöst wird, in bedruckten Bereichen (7b) das Release-Material (9) zusammen mit dem Bedruckungsmittel (6) am Haftklebstoff (5) haften bleibt und das Bedruckungsmittel (6) von der zweiten Oberflächenseite (4) abgelöst wird; so dass innerhalb der Beschichtung der zweiten Oberflächenseite (4) mit dem Release-Material (9) in den bedruckten Bereichen (7b) Fehlstellen (10) gebildet werden, welche kein Release-Material (9) aufweisen, sondern an denen die zweite Oberflächenseite (4) freigelegt ist; sowie auf der Beschichtung der ersten Oberflächenseite (3) mit dem Haftklebstoff (5) dazu entsprechende Bereiche (11) gebildet werden, die mit dem abgelösten und daran haftenden Release-Material (9) und zusätzlich dem Bedruckungsmittel (6) bedeckt sind.

12. Eine Verwendung einer Folie (1) nach einem der Ansprüche 1 bis 8 oder eines Klebebands nach einem der Ansprüche 9 bis 11 zum Bekleben von Oberflächen und/oder zum Abdichten von Öffnungen.

13. Eine Verwendung einer Folie (1) nach einem der Ansprüche 1 bis 8 als Release-Folie.

14. Ein System umfassend einen mit einem selbstklebenden Material (12) ausgerüsteten Gegenstand (13) und eine Folie (1) nach einem der Ansprüche 1 bis 8, wobei die Folie (1) das selbstklebende Material (12) bedeckt und wobei das Release-Material (9) der Folie (1) dem selbstklebenden Material (12) des Gegenstands (13) zugewandt ist und daran haftet.

15. Ein Verfahren zur Herstellung einer Folie (1) nach einem der Ansprüche 1 bis 33 umfassend die aufeinander folgenden Schritte
(i) Bereitstellen einer ggf. mehrlagigen Trägerschicht (2) mit einer ersten Oberflächenseite (3) und einer gegenüberliegenden zweiten Oberflächenseite (4);
(ii) teilflächiges Modifizieren der zweiten Oberflächenseite (4) entweder durch Oberflächenaktivierung oder durch Bedruckung mit einem Bedruckungsmittel (6), so dass auf der zweiten Oberflächenseite (4) modifizierte Bereiche (7) sowie nicht modifizierte Bereiche (8) erzeugt werden; und
(iii) teilflächiges oder vollflächiges Beschichten der modifizierten Bereiche (7) sowie der nicht modifizierten Bereiche (8) mit einem Release-Material (9).

## Claims

1. A film (1) comprising an optionally multi-ply carrier layer (2) having a first surface side (3) and an opposite second surface side (4);
wherein the second surface side (4) has had some of its area modified either by surface activation or by printing with a printing composition (6), so that the second surface side (4) comprises modified regions (7) and also unmodified regions (8);
wherein the modified regions (7) and also the unmodified regions (8) have been coated over some or all of their area with a release material (9); and
wherein the adhesion of the release material (9) against the carrier layer (2) in the modified regions (7) is different in degree in comparison to the adhesion of the release material (9) against the carrier layer (2) in the unmodified regions (8).

2. The film (1) according to Claim 1, wherein the adhesion of the release material (9) against the carrier layer (2) in the modified regions (7) is weaker than the adhesion of the release material (9) against the carrier layer (2) in the unmodified regions (8).

3. The film (1) according to Claim 2, wherein the modified regions (8) have been modified by printing with a printing composition (6), so that the modified regions (7) are printed regions (7b) and the unmodified regions (8) are unprinted regions (8b); and wherein the printed regions (7b) and also the unprinted regions (8b) have had some or all of their area coated with the release material (9).

4. The film (1) according to Claim 3, wherein the adhesion of the release material (9) on the printing composition (6) in the printed regions (7b) and the adhesion of the release material (9) on the second surface side (4) in the unprinted regions (8b) are in each case stronger than the adhesion of the printing composition (6) on the second surface side (4) in the printed regions (7b).

5. The film (1) according to any of Claims 2 to 4, wherein the printing composition (6) is based on a material selected from the group consisting of one-component varnishes, two-component varnishes, waterborne varnishes, solvent borne varnishes, thermally crosslinking varnishes, photochemically crosslinking varnishes, radically crosslinking varnishes, cationically crosslinking varnishes, varnishes based on acrylates, varnishes based on polyvinyl chloride (PVC), varnishes based on polyvinyl dichloride (PVDC), varnishes based on polyurethane, varnishes based on polyamide, and/or varnishes based on nitrocellulose.

6. The film (1) according to any of the preceding claims, wherein the first surface side (3) has had some or all of its area coated with a pressure-sensitive adhesive (5).

7. The film (1) according to Claim 6, wherein, in a state in which the pressure-sensitive adhesive (5) adheres to the release material (9), the adhesion of the release material (9) on the second surface side (4) in the unmodified regions (8) is stronger than the adhesion of the pressure-sensitive adhesive (5) on the release material (9).

8. The film (1) according to Claim 7, wherein the modified regions (8) have been modified by printing with a printing composition (6), wherein, in a state in which the pressure-sensitive adhesive (5) adheres to the release material (9), the adhesion of the pressure-sensitive adhesive (5) on the release material (9) is stronger than the adhesion of the printing composition (6) on the second surface side (4) in the printed regions (7b).

9. An adhesive tape comprising a film (1) according to any of the preceding claims.

10. The adhesive tape according to Claim 9, wherein the film (1) is present as a roll wound against itself, so that the pressure-sensitive adhesive (5) adheres to the release material (9).

11. The adhesive tape according to Claim 10, wherein the modified regions (8) have been modified by printing with a printing composition (6), wherein the adhesive tape has been formulated such that during unwinding, the pressure-sensitive adhesive (5) is detached from the release material (9) in unprinted regions (8b); in printed regions (7b) the release material (9) remains adhering together with the printing composition (6) to the pressure-sensitive adhesive (5), and the printing composition (6) is detached from the second surface side (4); so that within the coating of the second surface side (4) with the release material (9), in the printed regions (7b), vacancies (10) are formed which do not have any release material (9), but at which instead the second surface side (4) is exposed; and also, on the coating of the first surface side (3) with the pressure-sensitive adhesive (5), regions (11) corresponding thereto are formed, which are covered with the detached release material (9) adhering thereto and additionally with the printing composition (6).

12. A use of a film (1) according to any of Claims 1 to 8 or of an adhesive tape according to any of Claims 9 to 11 for sticking to surfaces and/or for sealing openings.

13. A use of a film (1) according to any of Claims 1 to 8 as a release film.

14. A system comprising an article (13) furnished with a self-adhesive material (12), and a film (1) according to any of Claims 1 to 8, wherein the film (1) covers the self-adhesive material (12) and wherein the release material (9) of the film (1) faces the self-adhesive material (12) of the article (13) and adheres thereto.

15. A method for producing a film (1) according to any of Claims 1 to 33, comprising the following successive steps
(i) providing an optionally multi-ply carrier layer (2) having a first surface side (3) and an opposite second surface side (4);
(ii) modifying some of the area of the second surface side (4) either by surface activation or by printing with a printing composition (6), so that modified regions (7) and also unmodified regions (8) are produced on the second surface side (4); and
(iii) coating some or all of the area of the modified regions (7) and also of the unmodified regions (8) with a release material (9).

## Revendications

1. Film (1) comprenant une couche de support (2), éventuellement multicouche, pourvue d'un premier côté de surface (3) et d'un deuxième côté de surface opposé (4) ; le deuxième côté de surface (4) étant partiellement modifié soit par activation de surface soit par impression avec un agent d'impression (6) de sorte que le deuxième côté de surface (4) comporte des zones modifiées (7) ainsi que des zones non modifiées (8) ; les zones modifiées (7) et les zones non modifiées (8) étant partiellement ou complètement recouvertes d'une matière antiadhésive (9) ; et
l'adhérence de la matière antiadhésive (9) à la couche de support (2) dans les zones modifiées (7) différant en force par rapport à l'adhérence de la matière antiadhésive (9) à la couche de support (2) dans les zones non modifiées (8).

2. Film (1) selon la revendication 1, l'adhérence de la matière antiadhésive (9) à la couche de support (2) dans les zones modifiées (7) étant plus faible que l'adhérence de la matière antiadhésive (9) à la couche de support (2) dans les zones non modifiées (8).

3. Film (1) selon la revendication 2, les zones modifiées (8) étant modifiées par impression avec un agent d'impression (6) de sorte que les zones modifiées (7) soient des zones imprimées (7b) et les zones non modifiées (8) soient des zones non imprimées (8b) ; et les zones imprimées (7b) ainsi que les zones non imprimées (8b) étant partiellement ou complètement revêtues de la matière antiadhésive (9).

4. Film (1) selon la revendication 3, l'adhérence de la matière antiadhésive (9) sur l'agent d'impression (6) dans les zones imprimées (7b) et l'adhérence de la matière antiadhésive (9) sur le deuxième côté de surface (4) dans les zones non imprimées (8b) étant chacune plus fortes que l'adhérence de l'agent d'impression (6) sur le deuxième côté de surface (4) dans les zones imprimées (7b) .

5. Film (1) selon l'une des revendications 2 à 4, l'agent d'impression (6) étant à base d'une matière choisie dans le groupe comprenant les peintures à un composant, les peintures à deux composants, les peintures à base d'eau, les peintures à base de solvants, les peintures réticulées thermiquement, les peintures réticulées photo-chimiquement, les peintures réticulées radicalement, les peintures réticulées cationiquement, les peintures à base d'acrylates, les peintures à base de polychlorure de vinyle (PVC), les peintures à base de polychlorure de vinyle (PVDC), les peintures à base de polyuréthane, les peintures à base de polyamide et/ou les peintures à base de nitrocellulose.

6. Film (1) selon l'une des revendications précédentes, le premier côté de surface (3) étant partiellement ou complètement enduit d'un adhésif (5) sensible à la pression.

7. Film (1) selon la revendication 6, dans un état dans lequel l'adhésif (5) sensible à la pression adhère à la matière antiadhésive (9), l'adhérence de la matière antiadhésive (9) sur le deuxième côté de surface (4) dans les zones non modifiées (8) étant plus forte que l'adhérence de l'adhésif (5) sensible à la pression sur la matière antiadhésive (9).

8. Film (1) selon la revendication 7, les zones modifiées (8) ayant été modifiées par impression avec un agent d'impression (6), dans un état dans lequel l'adhésif (5) sensible à la pression adhère à la matière antiadhésive (9), l'adhérence de l'adhésif (5) sensible à la pression à la matière antiadhésive (9) étant plus forte que l'adhérence de l'agent d'impression (6) au deuxième côté de surface (4) dans les zones imprimées (7b) .

9. Bande adhésive comprenant un film (1) selon l'une des revendications précédentes.

10. Bande adhésive selon la revendication 9, le film (1) se présentant sous la forme d'un rouleau enroulé sur lui-même de sorte que l'adhésif (5) sensible à la pression adhère à la matière antiadhésive (9).

11. Bande adhésive selon la revendication 10, les zones modifiées (8) ayant été modifiées par impression avec un agent d'impression (6), la bande adhésive étant confectionnée de manière à ce que l'adhésif (5) sensible à la pression se détache de la matière antiadhésive (9) lors du déroulement dans les zones non imprimées (8b), la matière antiadhésive (9) continue d'adhérer, conjointement avec l'agent d'impression (6), à l'adhésif (5) sensible à la pression dans les zones imprimées (7b) et l'agent d'impression (6) se détache du deuxième côté de surface (4) de sorte qu'à l'intérieur du revêtement du deuxième côté de surface (4) pourvu de la matière antiadhésive (9) dans les zones imprimées (7b) se forment des défauts (10) qui ne comportent pas de matière antiadhésive (9) mais sur lesquels le deuxième côté de surface (4) est exposé ; et sur le revêtement du premier côté de surface (3) pourvu de l'adhésif (5) sensible à la pression se forment des zones (11) correspondantes qui sont recouvertes de la matière antiadhésive (9) détachée et adhèrent à celui-ci et en outre de l'agent d'impression (6).

12. Utilisation d'un film (1) selon l'une des revendications 1 à 8 ou d'une bande adhésive selon l'une des revendications 9 à 11 pour coller des surfaces et/ou obturer des ouvertures.

13. Utilisation d'un film (1) selon l'une des revendications 1 à 8 comme film antiadhésif.

14. Système comprenant un objet (13) pourvu d'une matière autocollante (12) et un film (1) selon l'une des revendications 1 à 8, le film (1) recouvrant la matière autocollante (12) et la matière antiadhésive (9) du film (1) étant dirigée vers la matière autocollante (12) de l'objet (13) et adhérant à celle-ci.

15. Procédé de production d'un film (1) selon l'une des revendications 1 à 33, le procédé comprenant les étapes successives suivantes
(i) fournir une couche de support (2), éventuellement multicouche, pourvue d'un premier côté de surface (3) et d'un deuxième côté de surface opposé (4) ;
(ii) modifier partiellement le deuxième côté de surface (4) soit par activation de surface soit par impression avec un agent d'impression (6) de façon à générer des zones modifiées (7) et des zones non modifiées (8) sur le deuxième côté de surface (4) ; et
(iii) revêtir partiellement ou complètement des zones modifiées (7) et des zones non modifiées (8) avec une matière antiadhésive (9).
